# EUROPÄISCHE PATENTSCHRIFT

(11) **EP 1 721 127 B1**
(45) Veröffentlichungstag und Bekanntmachung des Hinweises auf die Patenterteilung: **19.03.2008**
(21) Anmeldenummer: 05707777.8
(22) Anmeldetag: 14.01.2005
(51) Int. Cl.: G01C 21/34

(54) **VERFAHREN ZUM SPEICHERN VON VERKEHRSWEGEABSCHNITTE REPR ESENTIERENDEN KARTENDATEN IN EINEM NAVIGATIONSSYSTEM UND NAVIGATIONSSYSTEM**
METHOD FOR STORING IN A NAVIGATION SYSTEM MAP DATA THAT REPRESENT TRAFFIC ROUTE SECTIONS AND CORRESPONDING NAVIGATION SYSTEM
PROCEDE POUR MEMORISER DES DONNEES CARTOGRAPHIQUES REPRESENTANT DES TRON ONS DE VOIE DANS UN SYSTEME DE NAVIGATION ET SYSTEME DE NAVIGATION CORRESPONDANT

(30) Priorität: 27.02.2004 DE 102004009463
(43) Veröffentlichungstag der Anmeldung: 15.11.2006
(73) Patentinhaber: ROBERT BOSCH GMBH, 70442 Stuttgart (DE)
(72) Erfinder: MUELLER, Guido, 06484 Quedlinburg (DE); KERSKEN, Ulrich, 31199 Diekholzen (DE)
(86) Internationale Anmeldenummer: PCT/EP2005/050146
(87) Internationale Veröffentlichungsnummer: WO 2005/083361

(56) Entgegenhaltungen:
- DE-A1- 10 029 198
- DE-A1- 10 155 514

## Beschreibung

### Stand der Technik

Die Erfindung geht von einem Verfahren zum Speichern von Verkehrswegeabschnitte repräsentierenden Kartendaten in einem Navigationssystem, insbesondere für Kraftfahrzeuge, sowie einem Navigationssystem nach der Gattung der unabhängigen Patentansprüche aus.

Fahrzeugnavigationssysteme berechnen Fahrrouten von einem Start- oder einem Fahrzeugstandort zu einem von einem Benutzer vorgegebenen Zielort auf Grundlage von Verkehrswegeabschnitte repräsentierenden Kartendaten. Die Kartendaten sind gewöhnlich auf Massenspeichermedien, wie CD oder DVD gespeichert und werden zur Fahrroutenberechnung zumindest auszugsweise in einen Speicher des Navigationssystems kopiert. Um auch bei Abweichen von einer berechneten Fahrroute dem Fahrzeugführer Zielführungshinweise zu dessen Führung zum Fahrziel zu geben, wird oftmals eine neue Fahrroutenberechnung vom nach dem Abweichen von der Fahrroute aktuellen Fahrzeugstandort zum Zielort erforderlich. Diese müssen dann erneut von dem Massenspeichermedium in den Speicher des Geräts eingelesen werden.

Es sind jedoch auch Fahrzeugnavigationssysteme bekannt geworden, die gleichzeitig über die Möglichkeit des Abspielens einer Audio-CD oder -DVD verfügen, wozu dasselbe Laufwerk wie für den Navigationsdatenträger verwendet wird. Nach Abschluss einer Fahrroutenberechnung kann das Massenspeichermedium aus dem Laufwerk entnommen und stattdessen eine Audio-CD oder -DVD eingelegt und abgespielt werden. Um auch bei solchen Geräten die Neuberechnung einer Fahrroute nach einem Verlassen der ursprünglichen Fahrroute zu ermöglichen, werden bei diesen Geräten Kartendaten für die Dauer der gesamten Zielführung im Gerätespeicher bevorratet. Aufgrund der Komplexität der Daten und einer begrenzten Speicherkapazität wird dazu ein Korridor um die Fahrroute definiert und nur solche Kartendaten bevorratet, die innerhalb des Korridors um die Fahrroute liegen.

Bei der Definition der Ausdehnung des Korridors besteht ein Zielkonflikt dahingehend, dass ein Nachladen von Kartendaten und ein damit verbundener CD- oder DVD-Wechsel möglichst für die gesamte Fahrroute vermieden oder aber möglichst selten erforderlich werden soll, andererseits aber der Korridor auch eine Mindestbreite aufweisen soll, so dass eine Fahrroutenberechnung auf Grundlage der im Speicher bevorrateten Kartendaten bei Verlassen der vorberechneten Fahrroute jederzeit möglich bleibt.

Die DE 101 55 514 A1 offenbart ein Verfahren und ein System zum Speichern von Verkehrswegeabschnitte repräsentierenden Kartendaten in einem Navigationssystem, wobei nur Kartendaten innerhalb eines Korridors um eine Fahrroute in einem Speicher des Navigationssystems abgelegt werden. Zur Ablage der Kartendaten im Speicher des Navigationssystems werden gegebenenfalls auch Fahrerpräferenzen berücksichtigt.

Die DE 100 29 198 A1 offenbart weiterhin, dass im Bereich des Start- und des Zielorts einer Routenberechnung vollständige Kartenausschnitte generiert werden, da dort die Wahrscheinlichkeit, den Anweisungen des Navigationsgeräts nicht folgen zu können, am höchsten sei.

### Vorteile der Erfindung

Das erfindungsgemäße Verfahren mit den Merkmalen des unabhängigen Verfahrensanspruchs sowie ein entsprechend ausgebildetes Navigationssystem haben den Vorteil, dass ein vergrößerter geografischer Bereich (Korridor) um eine berechnete Fahrroute durch die im Gerätespeicher bevorrateten Kartendaten abgedeckt wird.

Dies wird erfindungsgemäß dadurch erreicht, dass die Kartendaten innerhalb des Korridors vor ihrer Speicherung im Gerätespeicher selektiert, also ausgedünnt werden und nur die ausgedünnten Kartendaten gespeichert werden, wobei die Selektion der Kartendaten nach einer Benutzungswahrscheinlichkeit der im Korridor liegenden Verkehrswegeabschnitte für den Fall eines Abweichens von der Fahrroute erfolgt.

Vorteilhafte Ausführungsformen der Erfindung sind in den abhängigen Patentansprüchen angegeben und werden in der Folge im Zusammenhang mit der Beschreibung der Ausführungsbeispiele näher erläutert.

Vorteilhaft ist die Benutzungswahrscheinlichkeit eine Funktion des Abstandes eines jeweiligen Verkehrswegeabschnitts von der Fahrroute.

Vorteilhaft ist die Benutzungswahrscheinlichkeit eine Funktion einer Straßenklasse eines jeweiligen im Korridor liegenden Verkehrswegeabschnitts.

Vorteilhaft wird ein erster definierter Bereich um den Zielort der Fahrroute und/oder ein zweiter definierter Bereich um den Startort der Fahrroute von der Kartendatenselektion ausgenommen.

Vorteilhaft werden die Kartendaten in Kacheln einer vorgegebenen flächigen Ausdehnung verwaltet und die Selektion erfolgt für alle Kartendaten innerhalb einer jeden Kachel nach einem einheitlichen Selektionskriterium. Dies ermöglicht eine besonders einfache und effiziente Ausführung des Verfahrens zur Bildung des Korrdiors.

### Zeichnungen

Ausführungsbeispiele der Erfindung sind in den Figuren dargestellt und werden nachstehend naher erläutert. Gleiche Bezugszeichen in den Figuren kennzeichnen dabei gleiche oder gleichartige Elemente.

Es zeigen
Figuren 1A, 1B und 1C erste, zweite und dritte Korridor-Geometrien, wie sei bei Fahrzeugnavigationssystemen gemäß dem Stand der Technik vorgesehen werden,
Figur 2 ein Diagramm, aus der die Wahrscheinlichkeit, mit der ein Verkehrswegeabschnitt im Umkreis der vor berechneten Fahrroute nach Abweichen von der vorberechneten Fahrroute bei einer Neuberechnung der Fahrroute berücksichtigt wird in Abhängigkeit seiner Entfernung von der vorberechneten Fahrroute zu entnehmen ist,
Figur 3 ein weiteres Diagramm, in dem die Wahrscheinlichkeit, mit der ein Verkehrswegeabschnitt im Umkreis der vorberechneten Fahrroute nach Abweichen von der vorberechneten Fahrroute bei einer Neuberechnung der Fahrroute berücksichtigt wird in Abhängigkeit seiner Entfernung von der vorberechneten Fahrroute zu entnehmen ist, mit dem zusätzlichen Parameter der Straßenklasse des betrachteten Verkehrswegeabschnitts
Figur 4 ein weiteres Diagramm, in dem die Verteilung der Zahl bzw. der Gesamtlänge der Verkehrswegeabschnitte getrennt nach Straßenklassen aufgetragen ist,
Figur 5 ein Blockschaltbild des erfindungserheblichen Teils eines erfindungsgemäßen Navigationssystems,
Figur 6 ein erstes Ablaufdiagramm zu Erläuterung des erfindungsgemäßen Verfahrens,
Figuren 7a und 7B ein zweites Ablaufdiagramm zur Erläuterung des erfindungsgemäßen Verfahrens
Figur 8 eine schematische Darstellung des Korridors, wie er sich nach Anwendung einer bevorzugten vorteilhaften Ausführungsform des erfindungsgemäßen Verfahrens ergibt,
Figur 9 eine schematische Darstellung eines alternativen Korridors, wie er sich nach Anwendung einer vereinfachten Ausführungsform des erfindungsgemäßen Verfahrens ergibt.

### Beschreibung der Ausführungsbeispiele

Fahrzeugnavigationssysteme berechnen Fahrrouten von einem Start- oder einem Fahrzeugstandort zu einem von einem Benutzer vorgegebenen Zielort auf Grundlage von Verkehrswegeabschnitte repräsentierenden Kartendaten und leiten nach Abschluss der Fahrrouten-Berechnung den Benutzer durch Zielfuhrungshinweise, insbesondere Abbiegehinweise, entlang der berechneten Fahrroute zum Zielort. Grundsätzlich ist davon auszugehen, dass der Benutzer den Zielfuhrungshinweisen des Fahrzeugnavigationssystems folgt und nur in Ausnahmefällen von der berechneten Fahrroute abweicht. Ein solches Abweichen kann Folge eines Versehens des Fahrzeugführers, aber auch ein absichtliches Verlassen der Fahrroute zum Zwecke beispielsweise einer Stauumfahrung sein. In diesen Fällen muss ausgehend vom dann aktuellen Fahrzeugstandort, der nun nicht mehr auf der vorberechneten Fahrroute liegt, zumindest eine lokale Alternativroute bestimmt werden.

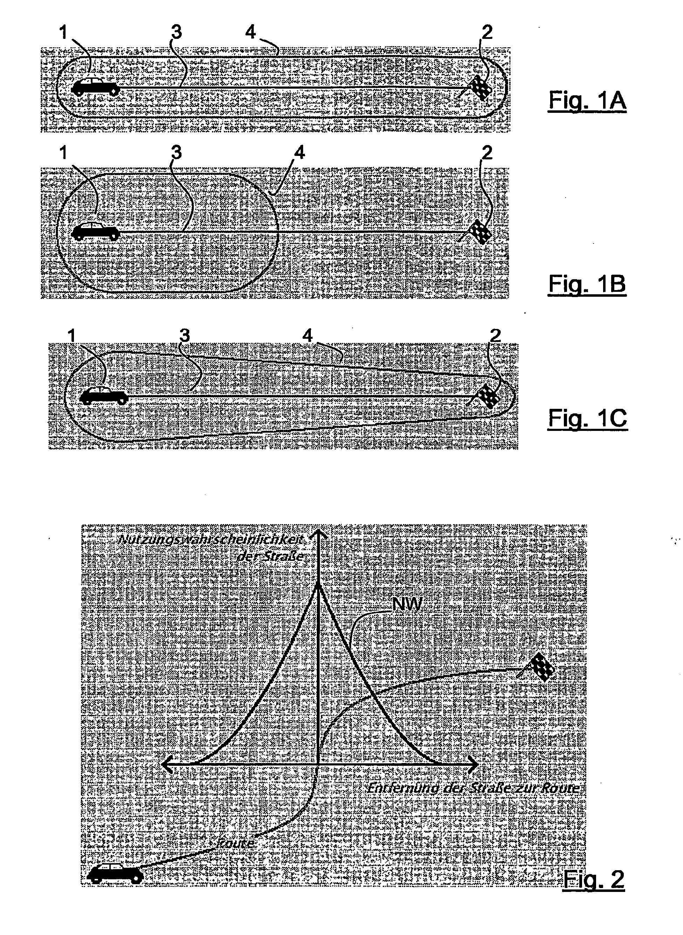

Basierend auf diesen Annahmen lässt sich, wie in der Grafik der Figur 2 dargestellt, feststellen, dass
- die die Fahrroute beschreibenden Straßenkartendaten mit der größten Wahrscheinlichkeit während der Zielführung Verwendung finden und
- die Wahrscheinlichkeit NW der Verwendung anderer Straßenkartendaten, die Streckenabschnitte außerhalb der berechneten Fahrroute bezeichnen, mit zunehmender Entfernung der Streckenabschnitte von der berechneten Fahrroute abnimmt.

Im einfachen Fall kann die geographische Entfernung verwendet werden. Neben der einfachen Luftlinienentfernung könnte aber auch die Vermaschung der Straßenabschnitte als Abstandskriterium dienen. In diesem Fall würde der Abstand durch die kleinste akkumulierte Länge oder Fahrzeit der Straßenabschnitte zwischen dem betrachteten Streckenabschnitt und der Fahrtroute dienen. Somit tendiert die Nutzungswahrscheinlichkeit für schlecht erreichbare Straßen trotz einer räumlichen Nähe gegen null, bzw. wäre für isolierte Straßenabschnitte gleich null.

In den Kartendaten sind oder werden die verschiedenen Straßen oder Verkehrswegeabschnitte entsprechend ihrer Bedeutung unterschiedlich attributiert, was bei einer Fahrroutenberechnung berücksichtigt wird.
So können die Eigenschaften von Straßenabschnitten, wie Tunnel, Fähre oder aber auch der Digitalisierungsstatus, wie vollständig erhoben oder nur teilweise, abgebildet sein. Als bevorzugte Eigenschaft von Straßenabschnitten ist die Klassifizierung dieser entsprechend nachfolgender beispielhafter Reihenfolge von der niedrigsten zur höchsten Klasse zu berücksichtigen.
1.) Klasse C1 - Sackgasse
2.) Klasse C2 - Wohnstraße
3.) Klasse C3 - Ortsammelstraße
4.) Klasse C4 - Ortdurchgangsstraße
5.) Klasse C5 - Kreisstraße
6.) Klasse C6 - Landesstraße
7.) Klasse C7 - Bundesstraße
8.) Klasse C8-Autobahn

Eine abweichende Klassifizierung ist denkbar und möglich.

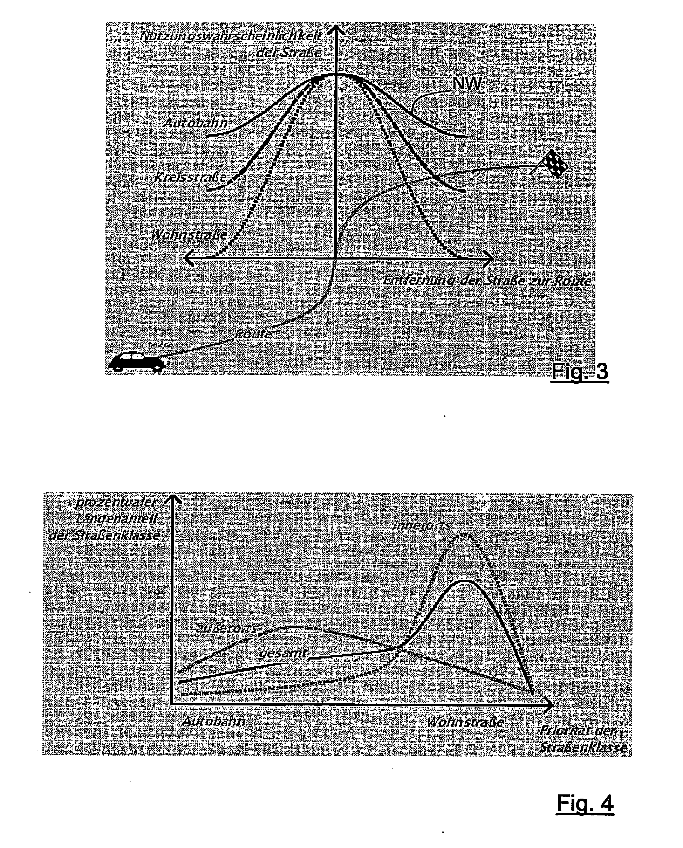

Bei der Fahrroutenberechnung werden in der Regel bevorzugt Streckenabschnitte bzw. Straßenabschnitte mit einer hoher Klassifizierung berücksichtigt, also bevorzugt Autobahn, Bundesstraße usw. vor Wohnstraßen, Ortsammelstraßen usw., insbesondere, wenn die Fahrroute unter dem Optimierungskriterium einer schnellsten oder effektivsten Fahrroute berechnet wird. Diese Betrachtungen gelten zudem bevorzugt für Fernrouten. Daraus ergibt sich die in Figur 3 dargestellte Nutzungswahrscheinlichkeit NW für einen bestimmten Straßenabschnitt als Funktion zum einen der Entfernung des Straßenabschnitts von der berechneten Fahrroute, zum anderen als Funktion der Straßenklasse des Straßenabschnitts.

Dieser Zusammenhang gilt sowohl für eine Fahrrouten-Erstberechnung, als auch für eine Neuberechnung nach einem Abweichen von der berechneten Fahrroute infolge einer Unaufmerksamkeit des Fahrzeugführers oder im Zusammenhang mit einer Dynamisierungsfunktion, d.h. einer Umgehungsroutenberechnung zum Zwecke einer Stauumfahrung, welche durch über Rundfunk oder eine Mobilfunkeinrichtung digital codiert übertragene Verkehrsstörungsmeldungen automatisch im Navigationssystem angestoßen werden kann.

Figur 4 zeigt schließlich eine typische Verteilung der Straßenlänge je Straßenklasse für einen digitalisierten Kartendatensatz am Beispiel einer Straßenkarte für Deutschland. Aus der Darstellung ist ersichtlich, dass der Anteil der für einen Fahrrouten-Berechnung primär wichtigen Straßen, also Autobahnen, Bundes- oder Landstraßen an den Gesamtkartendaten relativ gering ist. Es überwiegen Wohnstraßen oder verallgemeinert niederklassige Straßen repräsentierende Kartendaten, die vor allem im innerstädtischen Bereich anzutreffend sind, gegenüber höherklassigen Straßen.

Da aber genau diese Straßen nur in der unmittelbaren Umgebung der aktuellen Fahrzeugposition und in Zielnähe mit höherer Wahrscheinlichkeit für die Routenberechnung von Interesse sind, bietet sich deren Ausdünnung an. Durch deren hohen Anteil am Gesamtvolumen der Kartendaten und geringe Bedeutung für die Routenausprägung ergibt sich ein relativ großer Gewinn durch deren Ausdünnung, ohne dabei die Funktionsfähigkeit der Navigation nennenswert einzuschränken.

Die dargestellten Zusammenhänge stellen die Grundlage zur erfindungsgemäßen Selektion bzw. zum Ausdünnen von Straßenkartendaten bzw. allgemeiner Verkehrswegeabschnitte repräsentierenden Kartendaten dar.

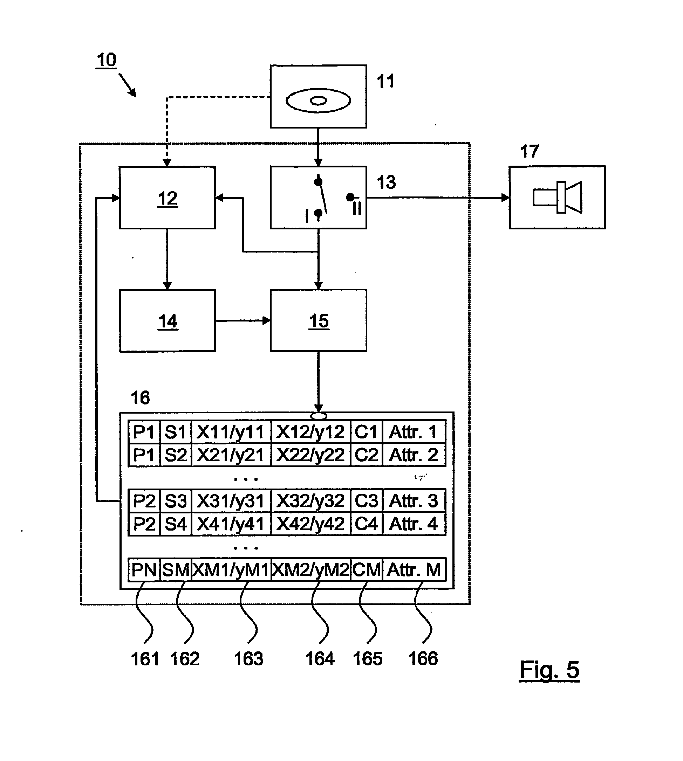

Figur 5 zeigt ein Blockschaltbild des erfindungserheblichen Teils eines erfindungsgemäßen Navigationssystems 10 zur Durchführung des erfindungsgemäßen Verfahrens. Dieses wird nachfolgend am Beispiel eines Fahrzeugnavigationssystems näher erläutert.

Das Navigationssystem 10 ist im wesentlichen in Form eines Rechners mit damit verbundenen Peripheriegeräten ausgeführt. Die nachfolgend erläuterten Funktionen sind weitestgehend in Form von Software-Modulen eines Betriebsprogramms des Navigationssystems 10 ausgebildet Bei den im Zusammenhang mit vorliegender Erfindung wesentlichen Peripheriegeräten handelt es sich um ein Lesegerät 11 für ein Massenspeichermedium, wie eine CD oder DVD. Dieses wird benötigt, um auf den genannten Massenspeichermedien abgelegte, Verkehrswegeabschnitte repräsentierende Kartendaten zwecks Berechnung einer Fahrroute in einen nicht dargestellten Arbeitsspeicher des Navigationssystems zu laden. Die Fahrroutenberechnung erfolgt in einem Software-Modul 12, die berechnete Fahrroute wird in einem Routenspeicher 14 des Fahrzeugnavigationssystems abgelegt Das Navigationssystem verfügt weiter in an sicher bekannter Weise über eine Ausgabevorrichtung 17, über die in ebenfalls an sich bekannter Weise Zielführungshinweise, beispielsweise in Form von gesprochenen Abbiegehinweisen, zur Leitung des Fahrzeugführers entlang einer berechneten Fahrroute ausgegeben werden.

Wie vom eingangs erwähnten Stand der Technik bekannt, soll das CD- oder DVD-Laufwerk ferner zum Lesen von Audio- oder Video-CDs oder -DVDs ausgebildet sein. Es ist dazu ein Umschalter 13 vorgesehen, der die von dem Massenspeicher gelesenen Daten wahlweise der Routenberechnung bzw. allgemeiner der Navigationssoftware oder einer Audio- und oder Video-Ausgabe 17 zuführt. Die Ausgabevorrichtung 17 dient also auch der Ausgabe von einem Unterhaltungsmedium (CD oder DVD) gelesener Unterhaltungsprogramme 10.

Das erfindungsgemäße Navigationssystem 10 ist derart ausgebildet, dass nach abgeschlossener Fahrroutenberechnung 12 die Navigations-CD oder -DVD aus dem Laufwerk entnommen werden kann und statt dessen eine Audio- oder Video-CD oder-DVD wiedergegeben werden kann. Um eine Zielführung auch nach einem Abweichen des Fahrzeugstandorts von der vorberechneten Fahrroute zu ermöglichen, ohne erneut den Navigationsdatenträger in das Laufwerk 11 einlegen zu müssen, verfügt das Navigationssystem 10 weiter über einen Kartendatenspeicher 16, in den nach Abschluss der Fahrroutenberechnung 12 Kartendaten von in einer definierten Umgebung der Fahrroute liegenden Verkehrswegeabschnitten geladen werden. Diese definierte Umgebung um die Fahrroute wird nachfolgend als Korridor bezeichnet.

Figuren 1A, 1B und 1C zeigen unterschiedliche Korridor-Geometrien, wie sie sich aufgrund des begrenzten Speicherplatzes und der Komplexität der Navigationsdaten gemäß dem Stand der Technik ergeben. Es bezeichnen dabei die Bezugszeichen 1 den Stand- oder Startort des Fahrzeugs, 2 den vom Benutzer eingegebenen Zielort, 3 die vom Navigationssystem berechnete Fahrroute und 4 den Korridor, zu dem Kartendaten im Kartendatenspeicher des Geräts abgelegt sind.

Im Zusammenhang mit vorliegender Erfindung sind folgende Eigenschaften der Kartendaten von Bedeutung. Die Kartendaten umfassen als wesentlichste Elemente Streckenabschnitte, also Verkehrswege- bzw. Straßenabschnitte S1, S2, S3, S4, ..., SM (Spalte 162) mit jeweils einer Anfangs- und einer Endkoordinate x11/y11 und x12/y12 usw. (Spalten 162 und 163) sowie eine Zuordnung C1, C2, ..., CM) zu einer Straßenklasse, wie Autobahn, Landesstraße usw. Außerdem sind den Straßenabschnitten gewöhnlich weitere Attribute Attr. 1, ...., Attr. M, wie beispielsweise zulässige Höchstgeschwindigkeiten oder Durchfahrwiderstände usw. zugeordnet, auf deren Grundlage die Routenberechnung unter einem Optimierungskriterium wie schnellste oder kürzeste Route usw. erfolgt Weiterhin sind die Kartendaten üblicherweise in Partitionen, auch Kacheln, unterteilt, wobei eine Kachel alle in einem vorgegebenen geografischen Gebiet liegenden Streckenabschnitte umfasst. Eine solche Kachel ist also in etwa mit einem Planquadrat vergleichbar. Der Speicher 16 ist im vorliegenden Fall nach den Partitionen P1, ..., PN und als nächstniederem Kriterium einer Nummer S1, ..., SM der Streckenabschnitte sortiert. Die Organisation der Kartendaten in Kacheln ebenso wie die Sortierung des Kartendatenspeichers 16 nach Kacheln ist jedoch nicht zwingend und für die Erfindung auch nicht entscheidend. Insbesondere ist auch der später beschriebene Verfahrensablauf zum Speichern von Kartendaten im Kartendatenspeicher 16 des Navigationssystems nicht zwingend auf eine Organisation der Kartendaten in Partitionen beschränkt.

Erfindungsgemäß ist bei dem beschriebenen Kombinationsgerät 10 aus Navigations- und Unterhaltungsgerät, nachfolgend weiterhin vereinfachend Navigationssystem, zusätzlich ein Ausdünnungs- oder Selektionsmodul 15 vorgesehen, welches die im Kartendatenspeicher 16 abzulegenden Informationen ausdünnt, also nach vorgegebenen Kriterien selektiert. Erst die ausgedünnten Kartendaten werden in den Kartendatenspeicher des Geräts 10 eingeschrieben. Dadurch ergibt sich eine verringerte Datendichte der in dem Kartendatenspeicher einzuschreibenden Kartendaten, so dass die von den gespeicherten Kartendaten abgedeckte Fläche, also die Ausdehnung des Korridors, bei gleicher Kapazität des Kartendatenspeichers 16 gegenüber dem Stand der Technik vergrößert werden kann.

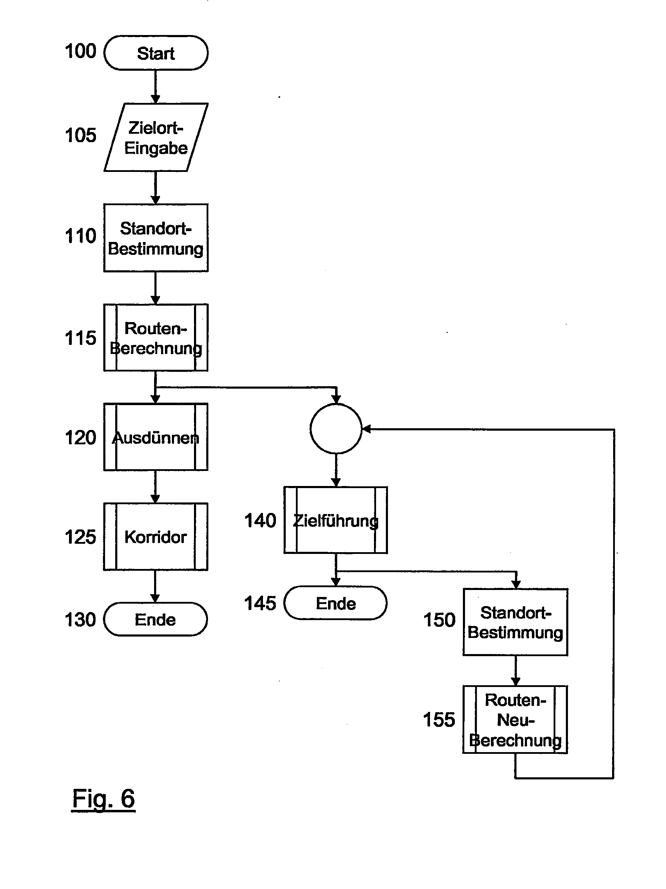

Das erfindungsgemäße Navigationssystem funktioniert wie folgt (Figur 6). Der Ablauf beginnt mit Schritt 100 mit Einschalten des Navigationssystems 10. Nach Eingabe eines Zielorts für die Routenberechnung (Schritt 105) und Bestimmung des aktuellen Fahrzeugstandorts als Startort beispielsweise mittels GPS-Satellitenortung (Schritt 110) erfolgt in an sich bekannter Weise eine Fahrrouten-Berechnung (Schritt 115) im Routenberechnungs-Modul 12, wobei die resultierende Fahrroute 3 in einem Fahrrouten-Speicher 14 des Navigationsgeräts 10 abgelegt wird. Im Anschluss an die Routenberechnung erfolgt in an sich bekannter Weise eine Zielführung (Schritt 140) durch Ausgabe von Zielfühnmgsinformationen an den Fahrzeugführer, insbesondere in Form von gesprochenen Fahrrichtungsbinweisen. Diese endet bei Erreichen des Zielorts (Schritt 145). Verlässt der Fahrzeugführer die vorberechnete Route, beispielsweise, weil er infolge Unaufmerksamkeit einem Fahrrichtungshinweis nicht gefolgt ist oder beispielsweise absichtlich, um einen Stau zu umfahren, so wird erneut der dann aktuelle Fahrzeugstandort bestimmt (Schritt 150). Dem schließt sich eine neue Fahrrouten-Berechnung (Schritt 155) an, wobei diese auf Grundlage in dem Kartendatenspeicher 16 des erfindungsgemäßen Navigationssystems 10 gespeicherter Kartendaten erfolgt. Die neu berechnete Fahrroute wird im Routenspeicher 14 abgelegt und anschließend die Zielführung (Schritt 140) mit der neu berechneten Fahrroute fortgesetzt.

Sobald die Fahrroute berechnet ist, beginnt das erfindungsgemäße Ausdünnen 15 (Schritt 120) der Kartendaten und das Abspeichern der ausgedünnten Kartendaten im Kartendatenspeicher 16, welche gespeicherten Kartendaten dann den Korridor bilden, innerhalb dessen das Navigationssystem eine Route auch ohne erneutes Einlegen der Navigations-CD oder -DVD berechnen kann. Der Ablauf endet nach dem Ausdünnen und Speichern der ausgedünnten Kartendaten mit Schritt 130. Wie bereits ausgeführt, erfolgt eine gegebenenfalls erforderliche Neuberechnung der Fahrroute unter Rückgriff auf die im Kartendatenspeicher 16 abgelegten ausgedünnten Kartendaten des Korridors 4.

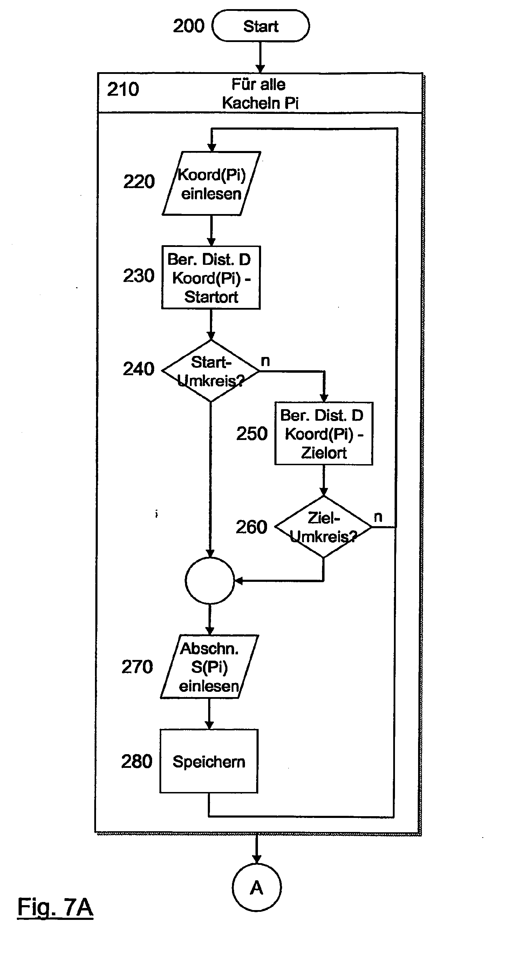

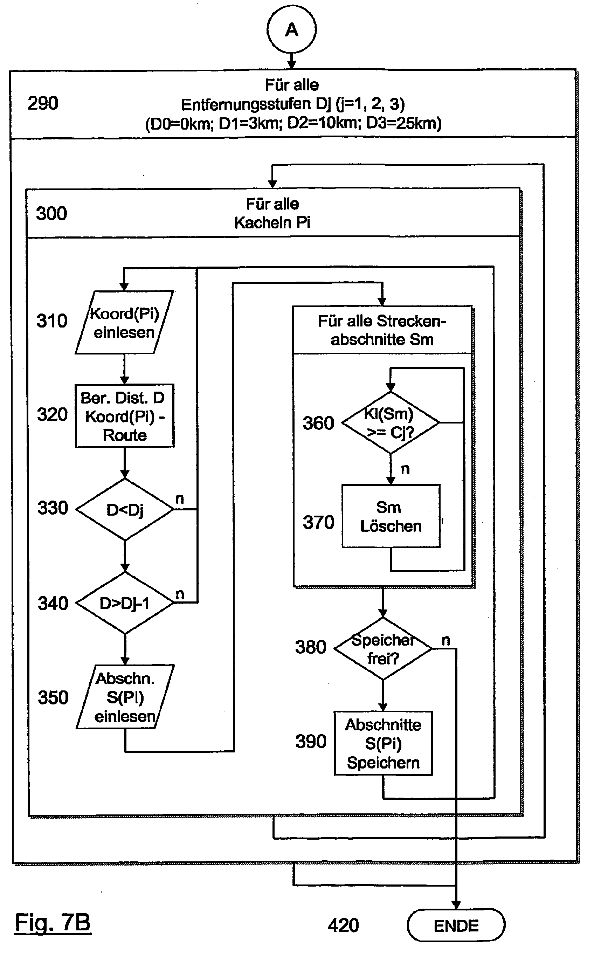

Die Selektion der Kartendaten sowie die Speicherung der selektierten Kartendaten wird nachfolgend am Beispiel eines besonders bevorzugten Ausführungsbeispiels gemäß dem Ablaufplan der Figur 7 beschrieben.

Die grundlegende Vorgehensweise besteht darin, solche Kacheln, die nahe der berechneten Fahrroute 3 liegen, weniger stark auszudünnen, als solche, die von der berechneten Fahrroute 3 weiter entfernt liegen. Nicht ausgedünnt werden Kacheln, die in einem vorgegebenen Umkreis von Start- oder Zielort 1 oder 2 liegen, Start- und Zielort oftmals in Wohnstraßen oder Sackgassen liegen, so dass selbst diese niedersten Straßenklassen in der Umgebung von Start-oder Zielort bei einer Fahrrouten-Neuberechnung mit einer gewissen Wahrscheinlichkeit benötigt werden.

Der Ablauf beginnt mit dem Ende der Routenberechnung gemäß Schritt 115 in Figur 6 mit Schritt 200 (Figur 7A) und stellt sich im einzelnen wie folgt dar.

1. Schritt: Es wird für alle Kacheln geprüft, ob sie in einem vorgegebenen Umkreis um den Start- oder den Zielort liegen. Für alle Kacheln, die dieses Kriterium erfüllen, werden alle Kartendaten ohne Ausdünnung in den Kartendatenspeicher 16 des Fahrzeugnavigationssystems kopiert.

Dazu werden die nachfolgenden Verfahrensschritte 220 bis 280 für alle verfügbaren Kartenpartitionen oder Kacheln Pi wiederholt (Schritt 210). Zunächst werden die Koordinaten einer gerade zu betrachtenden Kachel Pi von dem Massenspeichermedium, also der Navigations-CD oder -DVD 11 eingelesen (Schritt 220). Die Koordinaten der Kachel Pi können beispielsweise deren Mittelpunktskoordinaten, alternativ aber auch ihre Randkoordinaten sein. Anschließend wird die Entfernung D der Kachel Pi vom Startort 1 berechnet (Schritt 230) und anschließend geprüft, ob demnach die Partition Pi in einem vorgegebenen Umkreis von hier beispielsweise 5km um den Startort liegt (Schritt 240). Ist dies nicht der Fall, wird analog die Entfernung der Partition Pi vom Zielort 2 berechnet (Schritt 250) und geprüft, ob die Kachel Pi in einem vorgegebenen Umkreis von beispielsweise 5km um den Zielort liegt (Schritt 260). Ist dies nicht der Fall, wird der Ablauf mit der nächsten Kachel Pi+1 fortgesetzt. Liegt hingegen die Partition Pi im Umkreis des Start- oder des Zielorts, werden die ihr zugehörigen Streckenabschnittsdaten S(Pi) von der Navigations-CD oder -DVD gelesen (Schritt 270) und in den Kartendatenspeicher 16 des Navigationssystems 10 eingeschrieben (Schritt 280). Anschließend werden die dargestellten Schritte 220 bis 280 mit der nächsten Kartenpartition Pi+1 fortgesetzt. Schritt 210 terminiert, wenn alle Kacheln Pi der Karte auf diese Weise untersucht worden sind.

Gemäß einer vorteilhaften Ausführungsform der Erfindung können die Schritte 220 bis 280 aber auch auf einen Kartenausschnitt beschränkt werden, wie er beispielsweise auch schon für die Routenberechnung in Schritt 115 (Figur 6) in an sich bekannter Weise ausgewählt worden ist.

2. Schritt : Es wird für alle Kacheln, die nicht im vorgegebenen Umkreis um Start- oder Zielort liegen, geprüft, ob sie innerhalb eines vorgegebenen ersten Abstandes von der Fahrroute liegen. Ein günstiger Wert für den ersten Abstand liegt beispielsweise in der Größenordnung von 3km. Statt einem fest vorgegebenen ersten Abstand kann dieser aber beispielsweise auch in Abhängigkeit der Gesamtlänge der Fahrroute berechnet werden derart, dass er bei zunehmender Gesamtlänge kleiner wird.

Für alle Kacheln, die dieses Kriterium erfüllen, werden beginnend mit den dem Startort am nächsten liegenden Kacheln und in der Reihenfolge zunehmender Entfernung vom Startort die Kartendaten einer jeden Kachel einer Ausdünnung unterzogen. Dabei werden aus den Kartendaten einer jeden Kachel all diejenigen Kartendaten entfernt, die Streckenabschnitte mit einer Straßenklasse unterhalb einer Mindeststraßenklasse repräsentieren. Durch die daraus resultierende Selektion von Streckenabschnitten nach der Straßenklasse ergibt sich eine ausgedünnte KacheL Die Mindeststraßenklasse liegt beispielsweise bei der Ortsammelstraße, es werden also alle Sackgassen und Wohnstraßen aus den Kartendaten eliminiert. Die so ausgedünnten Straßenkartendaten werden sodann kachelweise im Kartendatenspeicher des Fahrzeugnavigationssystems abgespeichert.

Dazu werden die nachfolgenden Verfahrensschritte 310 bis 390 (Figur 7B) für alle verfügbaren Kartenpartitionen oder Kacheln Pi wiederholt (Schritt 300).

Zunächst werden die Koordinaten einer gerade zu betrachtenden Kachel Pi von dem Massenspeichermedium, also der Navigations-CD oder -DVD 11 eingelesen (Schritt 310). Anschließend wird der Abstand D der Kachel Pi von der zuvor berechneten Fahrroute 3 bestimmt (Schritt 320) und darauf geprüft, ob demnach die Partition Pi innerhalb einer ersten vorgegebene Distanz Dj von hier D1=3km von der Fahrroute 3 liegt (Schritt 330). Ist dies nicht der Fall, wird der Ablauf mit der nächsten Partition Pi fortgesetzt. Liegt hingegen die betrachtete Partition innerhalb der ersten vorgegebenen Distanz D1, so wird weiter geprüft, ob die Partition außerhalb der nächst kürzeren vorgegebenen Distanz Dj-1, hier also D0=0km liegt (Schritt 340). Im Falle des ersten Durchlaufs der Schritte 300 bis 390 ist diese zweite Überprüfung ohne Bedeutung, wohl aber bei den sich später anschließenden weiteren Durchläufen im Zusammenhang mit einem dritten und vierten und gegebenenfalls weiteren Schritten des Verfahrens. Sofern die Mittelpunktskoordinaten der Kacheln anstelle der der Route nächstliegenden Kantenkoordinaten, ist der Vergleichswert Dj jeweils mit einem zusätzlichen Offset in Höhe des Abstandes der Mittelpunktskoordinaten der Kachel Pi von deren der Route zugewandtem Rand zu versehen. Liegt die Kachel nicht in dem betrachteten Korridor Dj-1 und D1, wird der Ablauf mit Schritt 310 für die nächste Kachel Pi+1 fortgesetzt. Liegt hingegen die Kachel Pi in einem Abstandsbereich von Dj-1 und Dj von der berechneten Fahrroute 3, werden die Streckenabschnittsdaten S(Pi) der betrachteten Kachel Pi von der Kartendaten-CD oder -DVD gelesen.

Nachfolgend werden für alle Streckenabschnitte Sm der aktuellen Kartenpartition Pi die Schritte 360 und 370 durchgeführt (Schritt 355). Zunächst wird die Straßenklasse eines aktuell betrachteten Streckenabschnitts Sm mit einer für diesen Verfahrensabschnitt geltenden Mindeststraßenklasse Cj verglichen. Sofern die Straßenklasse des aktuellen Streckenabschnitts Sm geringer als die Mindeststraßenklasse Cj von hier C1 = Ortsammelstraße, ist, wird der Streckenabschnitt in den im Navigationssystem 10 zwischengespeicherten Kartendaten gelöscht. Anschließend werden die Schritte 360 und 370 für alle weiteren Streckenabschnitte Sm+1, Sm+2 usw. der aktuellen Karbenpartition Pi wiederholt. Gleiches gilt auch, wenn in Schritt 360 festgestellt wird, dass die Straßenklasse des aktuellen Streckenabschnitts gleich oder größer der aktuellen Mindeststraßenklasse ist.

Sind alle Streckenabschnitte der aktuellen Partition Pi in Schritt 355 geprüft, wird in Schritt 380 geprüft, ob im Kartendatenspeicher 16 des Geräts 10 noch genügend freier Speicherplatz zum Speichern der gemäß Schritt 355 ausgedünnten Kartendaten vorhanden ist. Ist dies nicht der Fall, endet das Ausdünnungsverfahren in Schritt 420. Der Korridor 4 ist durch die bis dahin im Kartendatenspeicher abgelegten Streckenabschnittsdaten definiert. Ist hingegen zum Abspeichern der Streckenabschnittsdaten Sm noch genügend Speicherplatz im Kartendatenspeicher 16 vorhanden, werden die ausgedünnten Kartendaten Sm der Partition Pi im Kartendatenspeicher 16 des Navigationsgeräts 10 abgespeichert.

Der beschriebene Ablauf wird sodann mit der nächsten Partition Pi+1 fortgesetzt.

Gemäß einer vorteilhaften Ausführungsform der Erfindung kann der Schritt 300, umfassend die Schritte 310 bis 390, aber auch auf einen Kartenausschnitt beschränkt werden, wie er beispielsweise auch schon für die Routenberechnung in Schritt 115 (Figur 6) in an sich bekannter Weise ausgewählt worden ist

3. Schritt: Es wird für alle Kacheln, die nicht im vorgegebenen Umkreis um Start- oder Zielort und die nicht innerhalb des vorgegebenen ersten Abstandes von der Fahrroute liegen, geprüft, ob sie innerhalb eines vorgegebenen zweiten Abstandes von der Fahrroute liegen. Ein günstiger Wert für den zweiten Abstand liegt beispielsweise bei 10km. Auch hier kann statt eines festen Werts der zweite Abstand in Abhängigkeit der Gesamtroutenlänge bestimmt und vorgegeben werden.

Für alle Kacheln, die dieses Kriterium erfüllen, werden beginnend mit den dem Startort am nächsten liegenden Kacheln und in der Reihenfolge zunehmender Entfernung vom Startort die Kartendaten einer jeden Kachel einer Ausdünnung unterzogen. Dabei werden aus den Kartendaten einer jeden Kachel all diejenigen Kartendaten entfernt, die Streckenabschnitte mit einer Straßenklasse unterhalb einer zweiten Mindeststraßenklasse repräsentieren. Die zweite Mindeststraßenklasse liegt beispielsweise bei der Kreisstraße, es werden also Kartendaten, welche Straßen unterhalb der Klasse Kreisstraße repräsentieren, im vorliegenden Beispiel also Sackgassen, Wohnstraßen, Ortsammelstraßen und Ortdurchgangsstraßen aus den Kartendaten einer jeden betrachteten Kachel gelöscht und die solchermaßen ausgedünnten Kartendaten sodann kachelweise im Kartendatenspeicher des Fahrzeugnavigationssystems abgespeichert.

Dazu wird der Verfahrensschritt 300, umfassend die Verfahrensschritte 310 bis 390 (Figur 7B) für alle verfügbaren Kartenpartitionen oder Kacheln Pi wie oben beschrieben wiederholt, allerdings mit dem Unterschied, dass nun das nächste Entfernungskriterium Dj von D2=10km sowie die Mindeststraßenklasse Cj von C2=Kreisstraße Verwendung findet.

Die Prüfung des Schritts 340 bewirkt, dass in diesem Schritt nur solche Kartenpartitionen Pi einer Ausdünnung unterzogen werden, die nicht schon zuvor ausgedünnt worden sind. Dazu wird hier geprüft, ob die aktuell betrachteten Kacheln Pi außerhalb des zuvor bereits betrachteten Korridors liegen.

Als Ergebnis der erneuten Durchführung des Schritts 300 werden nun alle Partitionen ausgedünnt, die innerhalb eines Abstandbereichs zwischen 3 und 10 km von der berechneten Route liegen. Bei diesen werden alle Straßen unterhalb der Kreisstraße gelöscht und im Kartendatenspeicher abgelegt, vorausgesetzt, dass dort noch genügend freier Speicherplatz vorhanden ist.

4. Schritt: Es wird für alle Kacheln, die nicht im vorgegebenen Umkreis um Start- oder Zielort, die weiter nicht innerhalb des vorgegebenen ersten Abstandes von der Fahrroute liegen und die auch nicht innerhalb es vorgegebenen zweiten Abstandes von der Fahrroute liegen, geprüft, ob sie innerhalb eines vorgegebenen dritten Abstandes von der Fahrroute liegen. Ein günstiger Wert für den dritten Abstand liegt beispielsweise bei 25km. Auch hier kann statt eines festen Werts der dritte Abstand beispielsweise in Abhängigkeit der Gesamtroutenlänge bestimmt und vorgegeben werden.

Für alle Kacheln, die dieses Kriterium erfüllen, werden beginnend mit den dem Startort am nächsten liegenden Kacheln und in der Reihenfolge zunehmender Entfernung vom Startort die Kartendaten einer jeden Kachel einer Ausdünnung unterzogen. Dabei werden aus den Kartendaten einer jeden Kachel all diejenigen Kartendaten entfernt, die Streckenabschnitte mit einer Straßenklasse unterhalb einer dritten Mindeststraßenklasse repräsentieren. Die dritte Mindeststraßenklasse liegt beispielsweise bei der Bundesstraße, es werden also Kartendaten, welche Straßen unterhalb der Klasse Bundesstraße repräsentieren, im vorliegenden Beispiel also Sackgassen, Wohnstraßen, Ortsammelstraßen, Ortdurchgangsstraßen, Kreisstraßen und Landesstraßen aus den Kartendaten einer jeden betrachteten Kachel gelöscht und die solchermaßen ausgedünnten Kartendaten sodann kachelweise im Kartendatenspeicher des Fahrzeugnavigationssystems abgespeichert.

Der Ablauf wird im Laufe eines der vorstehend beschriebenen Schritte vorzeitig abgebrochen, sobald die Kapazität des Kartendatenspeichers durch die bis zu diesem Zeitpunkt gespeicherten Kartendaten ausgeschöpft ist.

Dazu wird der Verfahrensschritt 300, umfassend die Verfahrensschritte 310 bis 390 (Figur 7B) für alle verfügbaren Kartenpartitionen oder Kacheln Pi wie oben beschrieben wiederholt, allerdings mit dem Unterschied, dass nun das nächste Entfernungskriterium Dj von D2=25km sowie die Mindeststraßenklasse Cj von C3=BundesstraßeVerwendung findet.

Der Ablauf kann über den vierten Schritt hinaus noch weiter fortgesetzt werden mit einem vierten und gegebenenfalls weiteren Entfernungskriterium, sofern die Speicherkapazität des Kartendatenspeichers 16 nicht bereits durch die schon im Zuge der vorangegangenen Schritte gespeicherten Kartendaten ausgeschöpft ist.

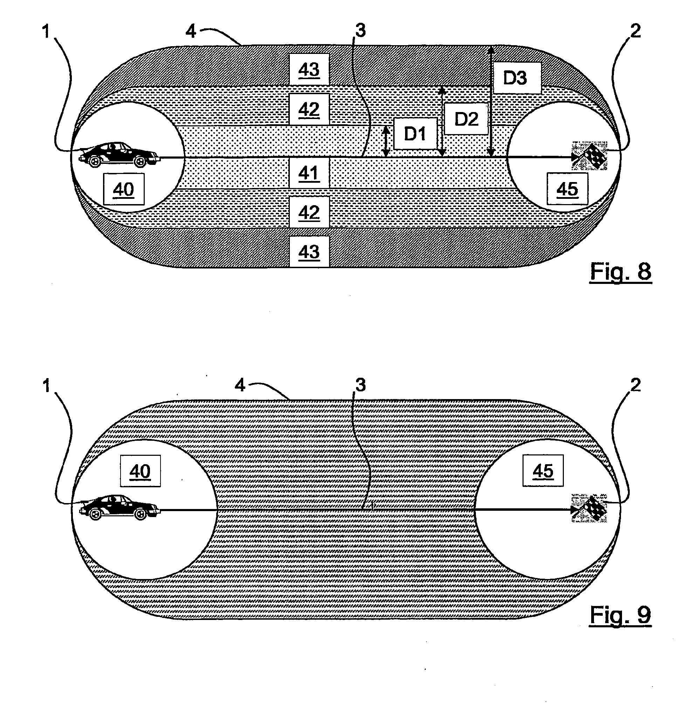

Als Ergebnis des beschriebenen Verfahrens ergibt sich der in Figur 8 dargestellte Korridor.

In Figur 8 bezeichnen 1 den Fahrzeugstandort zu Beginn der ersten Fahrroutenberechnung, also den Startort, 2 den Zielort und 3 die berechnete Fahrroute. Infolge des beschriebenen Ablaufs ergibt sich der Korridor 4, innerhalb dessen Kartendaten im Kartendatenspeicher 16 des Navigationssystems 10 abgespeichert sind.

Für Umkreise 40 und 45 des Start- und des Zielorts 1 und 2 liegen vollständige, also nicht ausgedünnte Kartendaten vor. Für einen zweiten Teilkorridor 41, der sich von der unmittelbaren Nachbarschaft der Fahrroute 3 bis zu einem Abstand von D1 = 3km von der Fahrroute erstreckt, liegen ebenfalls Kartendaten vor, bei denen allerdings alle Straßen unterhalb der Ortsammelstraße eliminiert sind. Für einen dritten Teilkorridor 42, der sich in einem Abstandsbereich von D1 = 3km bis D2 = 10km von der Fahrroute 3 erstreckt, liegen weiter ausgedünnte Kartendaten vor, bei der auch die Straßenklassen Ortsammelstraße und Ortsdurchfahrhstraße eliminiert sind, d.h. es liegen nur Kartendaten für Straßen oberhalb der Kreisstraße vor. In einem vierten Teilkorridor im Abstandbereich D2 = 10 km bis D3 = 25 km von der berechneten Fahrroute 3 liegen weiter ausgedünnte Straßenkartendaten nur noch zu Bundesstraßen oder Autobahnen vor.

Das Verfahren führt somit zu einer zunehmenden Ausdünnung von Straßenkartendaten mit zunehmender Entfernung der zugehörigen Streckenabschnitte von der Fahrroute. Dieses zunehmende Ausdünnen der im Navigationssystem 10 abgespeicherten Kartendaten bewirkt, dass auch bei Abweichen von der Fahrroute eine neue Fahrroutenberechnung vorgenommen werden kann, ohne dass dazu erneut Kartendaten von dem Navigationsdatenträger gelesen werden müssen. Somit kann beispielsweise weiterhin eine nach Abschluss der Erstroutenberechnung in das Lesegerät 11 eingelegt Audio-CD wiedergegeben werden.

Abweichend von der vorstehenden Beschreibung kann der Aufbau des Korridors auch anhand von Vermaschungsinformationen der Streckenabschnitte der berechneten Fahrroute orientiert werden. In diesem Falle würde beispielsweise im Falle eines Autobahnabschnitts als Teil der Fahrroute 3 ein Korridor auch um einen mit dem Autobahnabschnitt vermaschten weiteren Autobahnabschnitt gebildet mit einer Länge, die sich beispielsweise an der Lage der nächsteweichbaren Ausfahrt orientiert. Damit würde sichergestellt, dass der Fahrzeugführer nach unbeabsichtigtem Abbiegen auf eine Autobahn, die nicht Teil der Fahrroute 3 ist, wieder auch die ursprünglich Fahrroute zurückgeführt werden kann, da der wie beschrieben gebildete Korridor 4 eine Berechnung einer schnellsten Rückführungsroute ermöglicht.

Figur 9 zeigt ebenfalls einen abweichenden Korridor 4, bei dem innerhalb des gesamten Korridors der gleiche Ausdünnungsgrad gewählt wurde. Hier sind beispielsweise abgesehen von Start- und Zielort, in deren Umkreis sämtliche Kartendaten, also auch über Wohnstraßen usw. vorliegen, sämtliche innerörtlichen Straßen, sofern sie nicht gleichzeitig Kreis-, Landes- oder Bundesstraße sind, aus den Kartendaten entfernt worden. Auch diese Ausbildung des Korridors stellt eine praxisgerechte Ausführungsform der Erfindung dar, denn gerade im Falle von Fernroute haben innerörtliche Straßen außerhalb des Start- und des Zielgebiets schon alleine aufgrund ihres in der Regel vergleichsweise hohen Streckenwiderstands eine sehr geringe Wahrscheinlichkeit NW, in eine Umgehungsroutenberechnung einbezogen zu werden.

Im Zusammenhang mit vorliegender Erfindung sind somit eine Mehrzahl von Ausdünnungsstrategien möglich, die hier nicht abschließend aufgezählt werden können, nichts desto weniger aber im Bereich der Erfindung liegen.

Unabhängig von der jeweiligen exakten Ausprägung insbesondere des Ausdünnungsverfahrens bewirkt die Erfindung, dass ein Korridor 4 bei gleicher Auslegung der Kapazität des Kartendatenspeichers 16 gegenüber dem Stand der Technik eine erheblich größere räumliche Ausdehnung hat, wobei infolge der vorstehenden Betrachtungen der Nutzungswahrscheinlichkeite bestimmter Straßenklassen bei einer Fahrrouten-Neuberechnung sich die Ausdünnung auf die Berechnung der Fahrroute in einer weit überwiegenden Anzahl der Fälle nicht und wenn überhaupt, dann zumindest nicht gravierend negativ auswirkt.

## Patentansprüche

1. Verfahren zum Speichern von Verkehrswegeabschnitte repräsentierenden Kartendaten in einem Navigationssystem (10), insbesondere für Kraftfahrzeuge, wobei nur Kartendaten innerhalb eines Korridors (4) um eine Fahrroute (3) in einem Speicher (16) des Navigationssystems (10) abgelegt werden, wobei die Kartendaten innerhalb des Korridors (4) vor der Speicherung im Navigationssystem (10) selektiert werden,
**dadurch gekennzeichnet,**
**dass** die Selektion der Kartendaten nach einer Benutzungswahrscheinlichkeit der im Korridor (4) liegenden Verkehrswegeabschnitte für den Fall eines Abweichens von der Fahrroute erfolgt.

2. Verfahren nach Anspruch 1, **dadurch gekennzeichnet, dass** die Benutzungswahrscheinlichkeit eine Funktion des Abstandes (D1, D2, D3) eines jeweiligen Verkehrswegeabschnitts von der Fahrroute (3) ist.

3. Verfahren nach Anspruch 1 oder 2, **dadurch gekennzeichnet, dass** die Benutzungswahrscheinlichkeit eine Funktion einer Eigenschaft eines Verkehrswegeabschnitts, vorzugsweise einer Straßenklasse, eines jeweiligen im Korridor (4) liegenden Verkehrswegeabschnitts ist.

4. Verfahren nach einem der vorhergehenden Ansprüche, **dadurch gekennzeichnet, dass** ein erster definierter Bereich (45) um den Zielort (2) der Fahrroute (3) und/oder ein zweiter definierter Bereich (40) um den Startort (1) der Fahrroute (3) von der Kartendatenselektion ausgenommen wird.

5. Verfahren nach einem der vorhergehenden Ansprüche, **dadurch gekennzeichnet, dass** die Kartendaten in Kacheln einer vorgegebenen flächigen Ausdehnung verwaltet werden und dass die Selektion für alle Kartendaten innerhalb einer jeden Kachel nach einem einheitlichen Selektionskriterium erfolgt.

6. Navigationssystem (10) insbesondere für ein Kraftfahrzeug, mit einem Speicher (16) für Kartendaten und einer Steuerung, welche dazu ausgebildet ist,
- in dem Speicher (16) nur solche Kartendaten abzulegen, welche Verkehrswegeabschnitte innerhalb eines Korridors (4) um eine Fahrroute (3) repräsentieren, und
- die Kartendaten, welche innerhalb des Korridors (4) liegende Verkehrswegeabschnitte repräsentieren, vor der Speicherung zu selektieren,
**dadurch gekennzeichnet,**
**dass** die Steuerung ferner dazu ausgebildet ist, die Selektion (15) der Kartendaten nach einer Benutzungswahrscheinlichkeit der im Korridor (4) liegenden Verkehrswegeabschnitte für den Fall eines Abweichens von der Fahrroute (3) vorzunehmen.

## Claims

1. Method for storing map data which represent traffic route sections in a navigation system (10), in particular for motor vehicles, wherein only map data within a corridor (4) around a route (3) is stored in a memory (16) of the navigation system (10), wherein the map data within the corridor (4) is selected before the storage in the navigation system (10), **characterized in that** the selection of the map data is carried out in accordance with a use probability of the traffic route sections in the corridor (4) in case there is a deviation from the route.

2. Method according to Claim 1, **characterized in that** the use probability is a function of the distance (D1, D2, D3) of a respective traffic route section from the route (3).

3. Method according to Claim 1 or 2, **characterized in that** the use probability is a function of a property of a traffic route section, preferably a road class, of a respective traffic route section in the corridor (4).

4. Method according to one of the preceding claims, **characterized in that** a first defined area (45) around the destination location (2) of the route (3) and/or a second defined area (40) around the starting location (1) of the route (3) is exempted from the map data selection.

5. Method according to one of the preceding claims, **characterized in that** the map data is managed in the form of tiles with a predefined surface extent, and **in that** the selection is carried out for all the map data within each tile according to a uniform selection criterion.

6. Navigation system (10), in particular for a motor vehicle, having a memory (16) for map data and a controller which is designed
- to store in the memory (16) only map data which represents traffic route sections within a corridor (4) around a route (3), and
- to select, before the storage, the map data which represents traffic route sections within the corridor (4),
**characterized in that** the controller is also designed to perform the selection (15) of the map data according to a use probability of the traffic route sections in the corridor (4) in case there is a deviation from the route (3).

## Revendications

1. Procédé pour mémoriser des données cartographiques représentant des tronçons de voies de circulation dans un système de navigation (10), notamment pour des véhicules automobiles, selon lequel
seules les données cartographiques d'un couloir (4) autour d'un trajet de circulation (3) sont enregistrées dans une mémoire (16) du système de navigation (10),
les données cartographiques à l'intérieur du couloir (4) sont sélectionnées avant d'être mémorisées dans le système de navigation (10),
**caractérisé en ce que**
la sélection des données cartographiques se fait suivant une probabilité d'utilisation des tronçons de voies de circulation situées dans le couloir (4) au cas où l'on quitterait le trajet.

2. Procédé selon la revendication 1,
**caractérisé en ce que**
la probabilité d'utilisation est une fonction de la distance (D1, D2, D3) d'un segment de tronçon de voie respectif par rapport au trajet (3).

3. Procédé selon la revendication 1 ou 2,
**caractérisé en ce que**
la probabilité d'utilisation est une fonction d'une caractéristique d'un tronçon de voie de circulation, de préférence d'une classe de route, d'un tronçon de voie de circulation respectif situé dans le couloir (4).

4. Procédé selon l'une des revendications précédentes,
**caractérisé en ce qu'**
on élimine une première zone définie (45) autour de la destination (2) du trajet (3) et/ou une seconde zone définie (40) autour de l'emplacement (1) du trajet (3) pour la sélection des données cartographiques.

5. Procédé selon l'une des revendications précédentes,
**caractérisé en ce qu'**
on gère les données cartographiques dans des cases ayant une extension en surface prédéfinie et
la sélection de toutes les données cartographiques à l'intérieur de chaque case se fait selon un critère de sélection uniforme.

6. Système de navigation (10), notamment d'un véhicule automobile, comportant une mémoire (16) pour les données cartographiques et une commande conçue pour
- enregistrer dans la mémoire (16) seulement les données cartographiques qui représentent des tronçons de voies de circulation à l'intérieur d'un couloir (4) autour d'un trajet (3) et
- sélectionner avant leur enregistrement en mémoire, des données cartographiques des tronçons de voies de circulation situés dans le couloir (4),
**caractérisé en ce que**
la commande est en outre réalisée pour que la sélection (15) des données cartographiques soit faite selon une probabilité d'utilisation des tronçons de voies de circulation situés dans le couloir (4) au cas où l'on quitterait le trajet (3).
